# EUROPÄISCHE PATENTSCHRIFT

(11) **EP 2 818 597 B1**
(45) Veröffentlichungstag und Bekanntmachung des Hinweises auf die Patenterteilung: **29.03.2017**
(21) Anmeldenummer: 13173912.0
(22) Anmeldetag: 27.06.2013
(51) Int. Cl.: E03B 7/04, E03B 7/09, F16L 41/02

(54) **Trink- oder Brauchwassersystem**
Drinking water or domestic water system with such a fitting
Système d'eau potable ou d'eau sanitaire comprenant une telle armature

(43) Veröffentlichungstag der Anmeldung: 31.12.2014
(73) Patentinhaber: REHAU AG + Co, 95111 Rehau (DE)
(72) Erfinder: Möckel, Tino, 90765 Fürth (DE)

(56) Entgegenhaltungen:
- EP-A1- 2 098 647
- DE-U1-202006 011 360
- SU-A1- 1 481 552
- US-A- 1 307 337
- US-A- 2 533 720
- US-A1- 2004 182 451

## Beschreibung

Die vorliegende Erfindung betrifft ein Trink- oder Brauchwassersystem mit wenigstens einem Stockwerks- oder Steigrohrstrang oder -ring, das mehrere in Strömungsrichtung in dem Strang oder Ring hintereinander angeordnete Ringleitungen umfasst, die jeweils zu mindestens einem Verbraucher führen und jeweils über zwei einstückige Anschlussarmaturen an den Strang oder Ring angebunden sind, wobei die einstückige Anschlussarmatur zum Verbinden einer Ringleitung mit mindestens einem Verbraucher an einen Stockwerks-oder Steigrohrstrang oder -ring eine an den Strang oder Ring anschließbare Einlassöffnung mit im Wesentlichen kreisförmigen Querschnitt, eine an den Strang oder Ring anschließbare Auslassöffnung mit im Wesentlichen kreisförmigen Querschnitt, einen sich von der Einlassöffnung zur Auslassöffnung erstreckenden Leitungskanal, eine zum Anschluss der Ringleitung vorgesehene Einfädel- oder Ausfädelöffnung und einen in den Leitungskanal einmündenden Einfädel- oder Ausfädelkanal umfasst, wobei der in den Leitungskanal einmündende Einfädel- oder Ausfädelkanal bogenförmig oder kreissegmentförmig zu einer von der Einlassöffnung zur Auslassöffnung gerichteten Hauptströmungsrichtung in den Leitungskanal einmündet.

Ein derartiges Trink- oder Brauchwassersystem ist aus der DE 20 2006 011 360 bekannt. Weitere einstückige Anschlussarmaturen zur Verwendung in einem Trink- oder Brauchwassersystem, die üblicherweise auch als T-Stücke bezeichnet werden, sind im Stand der Technik bekannt. Sie werden auf dem Gebiet der Trinkwassertechnik eingesetzt. Insbesondere beim Etagenwohnungsbau wird aus einem Stockwerks- oder Steigrohrstrang in der Regel ein Strangabgang in die jeweilige Nutzungseinheit abgezweigt, von wo aus die einzelnen Entnahmestellen mittels parallel geführter Einzelzuleitungen (Verteiler-Installation), serieller Verbrauchsleitungen (Reiheninstallation), Mischformen aus paralleler und serieller Installation und in letzter Zeit verstärkt Ringinstallationen angeschlossen werden. Diese Anordnung ist bedingt durch den erforderlichen Einbau einzelner Wassermengenzähler für die jeweiligen Nutzungseinheiten. Ist eine Wassermengenzählung für die einzelnen Einheiten jedoch nicht erforderlich, kann die Ringleitung auch direkt aus dem Strang abgezweigt werden. Dadurch ist gewährleistet, dass bei einem Durchfluss im Strang auch in der Ringleitung ein sehr geringer Volumenstrom fließt. Auf diese Weise wird bei einer Entnahme von Wasser in darüber liegenden Stockwerken auch dann Wasser im darunter liegenden Stockwerk ausgetauscht werden, wenn kein Trinkwasser von einem an die Ringleitung angeschlossenen Verbraucher entnommen wird.

Um diesen Volumenstrom zu erhöhen, sind im Stand der Technik verschiedene Ansätze bekannt. Beispielsweise beschreibt die DE 39 19 074 A1 eine derartige Anschlussarmatur, bei der die Ringleitung in einem Winkel von etwa 90° zur Hauptströmungsrichtung in die Anschlussarmatur und damit in den Strang eingeleitet wird. Die Anschlussarmatur weist eine Querschnittverengung auf, die im Bereich der Einfädelöffnung einen Unterdruck relativ zum Druck im Strang erzeugt, so dass ein Venturi-Effekt auftritt.

Zur Lösung dieses Problems schlägt die EP 1 882 784 A1 vor, die aus der Ringleitung zurückgeführte Ringleitungsströmung unter einem Winkel von nicht mehr als 75° zur Hauptströmungsrichtung gerade in den Steigrohrstrang einströmen zu lassen. Auch bei einer derartigen Anschlussarmatur treten jedoch noch erhebliche Druckverluste auf.

Vor diesem Hintergrund liegt der vorliegenden Erfindung die Aufgabe zugrunde, ein Trink-und Brauchwassersystem mit einer entsprechenden Anschlussarmatur zur Verfügung zu stellen, das die Nachteile des Stands der Technik reduziert bzw. überwindet. Insbesondere soll die verwendete Anschlussarmatur einen geringen Druckverlust besitzen. Darüber hinaus soll die verwendete Anschlussarmatur einfach einbaubar und kostengünstig herstellbar sein.

Diese und andere Aufgaben werden durch ein Trink- oder Brauchwassersystem mit den Merkmalen des Anspruchs 1 gelöst. Bevorzugte Ausführungsformen der vorliegenden Erfindung sind in den abhängigen Ansprüchen beschrieben.

Gemäß der vorliegenden Erfindung wurde erkannt, dass die bei der Zurückführung der Ringleitungsströme in den Steigrohrstrang erzeugten Druckverluste dadurch minimiert werden können, dass die Ringleitungsströmung in einem Bogen zurück in den Steigrohrstrang eingeführt wird. Dadurch nähert sich die aus der Ringleitung zurückgeführte Strömung näherungsweise tangential der Hauptströmungsrichtung im Steigrohrstrang an, so dass die Druckverluste weiter reduziert sind. Gleichermaßen wurde erfindungsgemäß erkannt, dass die Druckverluste reduziert werden können, wenn die Ausfädelung eines Teils des durch den Steigrohrstrang strömenden Mediums in einem Bogen aus dem Steigrohrstrang eingefädelt wird. Dadurch trennen sich die Teile der Strömung durch den Steigrohrstrang näherungsweise tangential, so dass die Druckverluste ebenfalls weiter reduziert sind.

Dementsprechend liegt die vorliegende Erfindung in der Bereitstellung eines Trink- oder Brauchwassersystem mit den Merkmalen des Anspruchs 1.

Wie hierin verwendet, bedeutet der Begriff "Hauptströmungsrichtung" (H) die Hauptströmungsrichtung von durch die erfindungsgemäße Anschlussarmatur geführtem Wasser, also von der Einlassöffnung durch den Leitungskanal in Richtung der Auslassöffnung der erfindungsgemäßen Anschlussarmatur.

Erfindungsgemäß kann es hinsichtlich der einstückigen Anschlussarmatur von Vorteil sein, wenn der Bogen, mit dem der Einfädel- oder Ausfädelkanal in den Leitungskanal einmündet, einen großen Krümmungsradius aufweist. Diesbezüglich ist ein gleitender Krümmungsradius des Einfädel- oder Ausfädelkanals im Bereich der Einmündung in den Leitungskanal bevorzugt, der zwischen dem Doppelten und dem Zwanzigfachen des Radius der Auslassöffnung liegt. Besonders bevorzugt liegt der gleitende Krümmungsradius innerhalb eines Bereichs vom Dreifachen bis zum Zehnfachen des Radius der Auslassöffnung. Derartige Radienverhältnisse haben sich strömungstechnisch als besonders günstig erwiesen.

Es kann auch bevorzugt sein, wenn im Bereich einer Einmündung des Einfädel- oder Ausfädelkanals in den Leitungskanal ein Leitelement angeordnet ist. Ein derartiges Leitelement verhindert in diesem Bereich das Auftreten eines größeren Ablösebereichs der Strömung und trägt somit zu einem reduzierten Strömungswiderstand durch die erfindungsgemäße Anschlussarmatur bei. Das Leitelement ist vorzugsweise als ein der Hauptströmungsrichtung entgegen weisender, vorzugsweise nasenförmig ausgebildeter Vorsprung ausgebildet.

Erfindungsgemäß verlaufen die Mittelachse des Leitungskanals im Bereich der Einlassöffnung und die Mittelachse des Leitungskanals im Bereich der Auslassöffnung versetzt zueinander. Dadurch kann ein gerader Verlauf der Wandung des Leitungskanals der erfindungsgemäßen Anschlussarmatur in Höhe der Einfädel- oder Ausfädelöffnung an der dem Einfädel- oder Ausfädelkanal gegenüberliegenden Seite erzielt werden. Dadurch können Störungen der Strömung, die möglicherweise im Leitungskanal auftreten können, weiter verringert werden.

Es kann auch günstig sein, wenn die Auslassöffnung und/oder die Einfädel- oder Ausfädelöffnung einen geringeren Querschnitt als die Einlassöffnung besitzt. Diese Maßnahme trägt zu höheren Strömungsgeschwindigkeiten bei moderat erhöhten Druckverlusten im Leitungskanal bei, was zur Erhöhung des Volumenstroms durch die Einfädel- oder Ausfädelöffnung beiträgt. Besonders bevorzugt ist es diesbezüglich, wenn sowohl die Auslassöffnung als auch die Einfädel- oder Ausfädelöffnung einen geringeren Querschnitt besitzt als die Einlassöffnung.

Vorzugsweise ist die erfindungsgemäße einstückige Anschlussarmatur als einteiliges Gussteil ausgebildet. Hierzu haben sich insbesondere Edelstahl, Messing, insbesondere entzinkungsbeständiges Messing, und Rotguss als besonders geeignete Materialien erwiesen.

Erfindungsgemäß ist in einem Steigrohrstrang des erfindungsgemäßen Trink- oder Brauchwassersystems eine Ringleitung derart die über die jeweilige Einfädel- oder Ausfädelöffnung zweier Anschlussarmaturen an den Steigrohrstrang angeschlossen, dass zwischen der Auslassöffnung der ersten Anschlussarmatur und der Auslassöffnung der zweiten Anschlussarmatur ein Rohrleitungsabschnitt des Steigrohrstranges angeordnet ist. Auf diese Weise wird eine erhöhte Strömung in der Ringleitung erzeugt, wenn Wasser durch den Steigrohrstrang geleitet wird, auch wenn der Ringleitung selbst kein Wasser über einen der an die Ringleitung angeschlossenen Verbraucher entnommen wird. In diesem Zusammenhang ist es besonders bevorzugt, wenn der zwischen den Anschlussarmaturen angeordnete Rohrleitungsabschnitt des Steigrohrstranges einen kleineren Querschnitt als die Rohrleitungsabschnitt die jeweils mit der Einlassöffnung der einzelnen Anschlussarmaturen verbunden sind. Dadurch wird der beschriebene Effekt weiter verstärkt.

Im Folgenden soll die Erfindung anhand der in den Figuren dargestellten, nicht einschränkenden Ausführungsbeispiele näher beschrieben werden. Darin zeigen:
- Fig. 1: eine Längsschnittsansicht eines Ausführungsbeispiels eines Anschlusses;
- Fig. 2: eine schematische Darstellung eines Ausschnitts einer Strangleitung mit unter Verwendung einer erfindungsgemäßen Anschlussarmatur angeschlossenen Ringleitung gemäß einer Ausführungsform des erfindungsgemäßen Trink- oder Brauchwassersystems; und
- Fig. 3: eine schematische Darstellung eines Ausschnitts einer Strangleitung mit unter Verwendung einer anderen Anschlussarmatur angeschlossenen Ringleitung, dass kein Teil des Gegenstands des Anspruchs 1 ist.

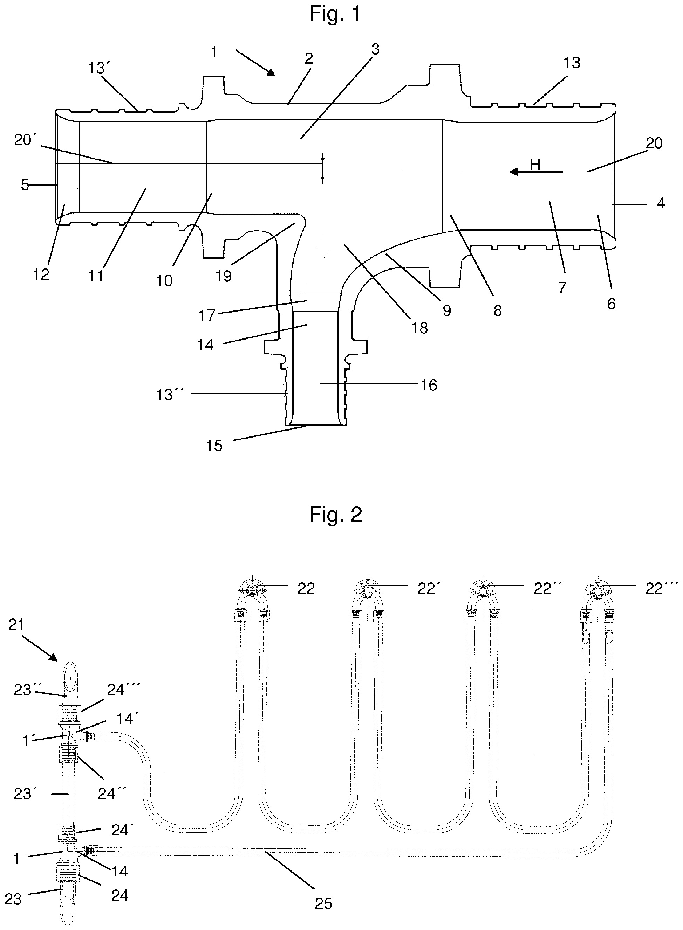

Fig. 1 zeigt eine Längsschnittansicht einer Ausführungsform einer einstückigen Anschlussarmatur 1 mit einem gegossenen Armaturengehäuse 2, in dem sich ein Leitungskanal 3 erstreckt. Der Leitungskanal 3 der erfindungsgemäßen Anschlussarmatur 1 wird an seinen Enden durch eine Einlassöffnung 4 und eine Auslassöffnung 5 begrenzt. Die Einlass- und Auslassöffnungen 4, 5 weisen jeweils einen im Wesentlichen kreisförmigen Querschnitt auf. Von der Einlassöffnung 4 in Richtung der Auslassöffnung 5 erstreckt sich die Hauptströmungsrichtung H im Leitungskanal 3 der

Anschlussarmatur 1. In Richtung dieser Hauptströmungsrichtung H schließt sich in dem Armaturengehäuse 2 an die Einlassöffnung 4 ein sich verjüngender Einlassbereich 6 ein im Wesentlichen zylindrischer Bereich 7, eine Querschnittserweiterung 8, ein Einmündungsbereich 9, eine Querschnittsverengung 10, ein weiterer im Wesentlichen zylindrischer Bereich 11, ein sich erweiternder Auslassbereich 12 und abschließend die Auslassöffnung 5 an. Mit Ausnahme des Einmündungsbereichs 9 sind die den Leitungskanal bildenden Teile rotationssymmetrisch ausgebildet. Auslassseitig weisen die einzelnen Teile jeweils einen geringeren Querschnitt auf als entsprechende einlassseitige Teile.

An der Außenseite der Anschlussarmatur sind einlassseitig und auslassseitig jeweils Rohrleitungsanschlussstutzen 13, 13' zum Anschluss von Rohrleitungsabschnitten (nicht gezeigt) ausgebildet. In der in Fig. 1 gezeigten Ausführungsform sind diese Rohrleitungsanschlussstutzen zum Anschluss von Rohrleitungsabschnitten mittels Axialpressverbindungen unter Einsatz von Schiebehülsen ausgebildet.

In einem erfindungsgemäßen Trink- oder Brauchwassersystem können auch mehrere Steigrohrstränge 21, die jeweils eine oder mehrere, über Anschlussarmaturen 1, 1' angeschlossene Ringleitungen 25 aufweisen, vorhanden sein. In einer derartigen Vermaschung sind die einzelnen Steigrohrstränge 21 des erfindungsgemäßen Trink- oder Brauchwassersystems vorzugsweise jeweils einzeln mittels Absperrorganen verschließbar.

Im Einmündungsbereich 9 des Leitungskanals 3 weist die Anschlussarmatur 1 darüber hinaus einen in den Leitungskanal 3 einmündenden Einfädel- oder Ausfädelkanal 14 auf, der in einer Einfädel- und Ausfädelöffnung 15 endet, an die sich zunächst ein zylindrischer Bereich 16 anschließt. Der zylindrische Bereich 16 des Einfädel- oder Ausfädelkanal 14 ist dabei etwa rechtwinklig zur Hauptströmungsrichtung H der erfindungsgemäßen Anschlussarmatur gerichtet. An den zylindrischen Bereich 16 schließt sich eine Querschnittserweiterung 17 an. Die Einfädel- oder Ausfädelöffnung 15, der zylindrische Bereich 16 und die Querschnittserweiterung 17 des Einfädel- oder Ausfädelkanal 14 sind dabei wiederum rotationssymmetrisch ausgebildet. An die Querschnitterweiterung schließt sich ein bogenförmig ausgebildeter Bereich 18 des Einfädel- oder Ausfädelkanal 14 an. Der Bereich 18 ist dabei derart gekrümmt, dass der Einfädel- oder Ausfädelkanal bogenförmig in den Leitungskanal 3 der erfindungsgemäßen Anschlussarmatur 1 einmündet. Auf diese Weise werden Verwirbelungen des durch die Anschlussarmatur strömenden Wassers minimiert.

Im Einmündungsbereich 9 weist das Armaturengehäuse 2 ein Leitelement 19 auf, das in der in Fig. 1 dargestellten Ausführungsform als ein entgegen der Hauptströmungsrichtung weisender, nasenförmiger Vorsprung ausgebildet ist. Das Leitelement vermindert die Ausbildung von Ablösebereichen im Einmündungsbereich 9 zwischen dem Leitungskanal 2 und dem Einfädel- oder Ausfädelkanal 14 und trägt somit zur Verringerung des Druckverlusts bei.

An der Außenseite weist die Anschlussarmatur im Bereich des Einfädel- oder Ausfädelkanals 14 einen weiteren Rohranschlussstutzen 13" auf, der in der Fig. 1 gezeigten Ausführungsform wiederum zum Anschluss von Rohrleitungsabschnitten mittels Axialpressverbindungen ausgebildet ist.

Im Einmündungsbereich 9 ist die Wandung des Leitungskanals 3 an der im Einfädel- oder Ausfädelkanal 14 gegenüberliegenden Seite geradlinig ausgebildet, um in diesen Bereich Störungen der Strömung des den Leitungskanal 3 fließenden Wassers zu vermeiden. Gemäß der vorliegenden Erfindung wird dies dadurch erzielt, dass die Mittelachse 20 des Leitungskanals im Bereich der Einlassöffnung 4 gegenüber der Mittelachse 20' des Leitungskanals 3 im Bereich der Auslassöffnung 5 versetzt zueinander ausgebildet sind.

In der in Fig. 1 dargestellten Ausführungsform der Anschlussarmatur 1 weist die Auslassöffnung einen kleineren Querschnitt als die Einlassöffnung 4 auf, während die Einfädel-oder Ausfädelöffnung 15 einen geringeren Querschnitt aufweist als die Auslassöffnung 5.

Fig. 2 zeigt eine schematische Darstellung eines Ausschnitts eines Steigrohrstrangs, an den über zwei Anschlussarmaturen eine Ringleitung mit vier jeweils als Wandscheiben dargestellten Verbrauchern 22, 22', 22", 22'" gezeigt ist. An den einlassöffnungsseitigen Rohranschlussstutzen 13 der in Fig. 2 unten dargestellten Anschlussarmatur 1 ist ein Rohrleitungsabschnitt 23 mit größerem Durchmesser mittels einer Schiebehülse 24 angeschlossen. Über den Einfädel- oder Ausfädelkanal 14 der Anschlussarmatur 1 wird eine Ringleitung 25 mit vier Verbrauchern 22, 22', 22", 22'" aus dem Steigrohrstrang 21 abgezweigt. An den auslassseitigen Rohranschlussstutzen 13' der Anschlussarmatur 1 ist wiederum mittels einer Schiebehülse 24' ein Rohrleitungsabschnitt 23' mit geringerem Querschnitt angeschlossen, der wiederum mittels einer Schiebehülse 24" an den auslassseitigen Rohranschlussstutzen 13' der in Fig. 2 oberen Rohranschlussarmatur 1' angeschlossen ist. Über den Einfädel- oder Ausfädelkanal 14 dieser Anschlussarmatur 1' wird die Ringleitung 25 zurück in den Steigrohrstrang 21 geführt. Dadurch fungiert der Einfädel- oder Ausfädelkanal 14 der Anschlussarmatur 1 als Ausfädelkanal 14, während der Einfädel- oder Ausfädelkanal 14 der Anschlussarmatur 1' als Einfädelungskanal 14 der Ringleitung 25 in den Steigrohrstrang 21 des erfindungsgemäßen Trink- oder Brauchwassersystems dient. Einlassseitig ist an den Rohranschlussstutzen 13 der Anschlussarmatur 1' wiederum über eine Schiebehülse 24'" ein weiterer Rohrleitungsabschnitt 23" angeschlossen, dessen Durchmesser dem des Rohrleitungsabschnitts 23 entspricht. In der Anschlussarmatur 1' ist die Strömungsrichtung entgegengesetzt zur Hauptströmungsrichtung H, wie sie in Fig. 1 angegeben ist. Strömt nun Wasser durch den Steigrohrstrang 21, tritt aufgrund des kleineren Durchmessers des Rohrabschnitts 23' in diesem Bereich innerhalb des Steigrohrstrangs 21 eine höhere Strömungsgeschwindigkeit auf als in dem Rohrabschnitt 23. Das Wasser im Steigrohrstrang strömt damit auch mit erhöhter Strömungsgeschwindigkeit durch die Auslassöffnung 5 in den Leitungskanal 3 der Anschlussarmatur 1' ein und verringert aufgrund der Querschnittserweiterung, die hier aufgrund der umgekehrten Strömungsrichtung als Querschnittsverengung dient, schnell seine Strömungsgeschwindigkeit, so dass ein Teil des in der Ringleitung 25 befindlichen Wassers aus der Ringleitung 25 nach dem Prinzip einer Wasserstrahlpumpe zurück in den Steigrohrstrang 21 gesogen wird. Auf diese Weise tritt bei Benutzung des Steigrohrstrangs 21 keine Stagnation des in der Ringleitung 25 befindlichen Wassers ein.

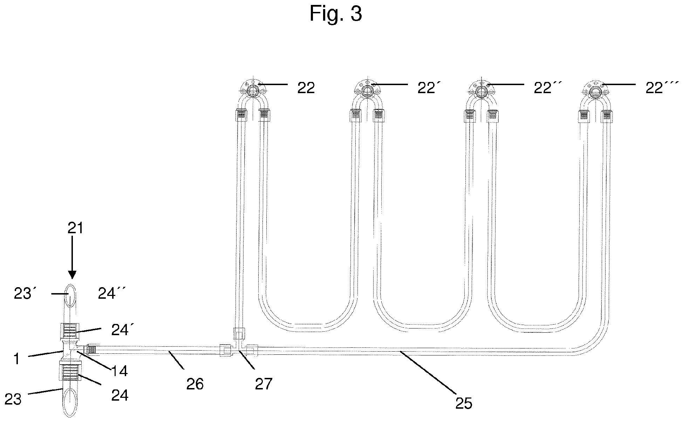

In Fig. 3 ist eine schematische Darstellung eines Ausschnitts eines Steigrohrstrangs 21 mit einer über eine Anschlussarmatur 1 abgeführte Strangleitung 26, an die über ein herkömmliches T-Anschlussfitting 27 eine Ringleitung 25 mit vier Verbrauchern 22, 22', 22" und 22'" angeschlossen ist. Alternativ dazu könnte das herkömmliche T-Anschlussfitting 27 auch durch eine Anschlussarmatur 1 ersetzt sein.

Alternativ zu den in Fig. 2 und Fig. 3 gezeigten Ausführungsformen des erfindungsgemäßen Trink- oder Brauchwassersystem können mehr oder weniger als vier Verbraucher 22, 22', 22", 22'" in den jeweiligen Ringleitungen 25 vorhanden sein.

Die Erfindung wurde vorangehend exemplarisch unter Bezugnahme auf die in den Figuren dargestellten Ausführungsformen der vorliegenden Erfindung im Detail erläutert. Es versteht sich jedoch, dass der Fachmann auf dieser Offenbarung weitere Ausführungen der vorliegenden Erfindung erkennt, ohne den Schutzbereich der beigefügten Ansprüche zu verlassen.

## Patentansprüche

1. Trink- oder Brauchwassersystem mit wenigstens einem Stockwerks- oder Steigrohrstrang oder-ring (21), das mehrere in Strömungsrichtung in dem Strang oder Ring (21) hintereinander angeordnete Ringleitungen (25) umfasst, die jeweils zu mindestens einem Verbraucher (22, 22', 22", 22'") führen und jeweils über zwei einstückige Anschlussarmaturen (1, 1') an den Strang oder Ring (21) angebunden sind, wobei die einstückige Anschlussarmatur (1, 1') zum Verbinden einer Ringleitung (25) mit mindestens einem Verbraucher (22, 22', 22", 22'") an einen Stockwerks- oder Steigrohrstrang oder-ring (21) eine an den Strang oder Ring (21) anschließbare Einlassöffnung (4) mit im Wesentlichen kreisförmigen Querschnitt, eine an den Strang oder Ring (21) anschließbare Auslassöffnung (5) mit im Wesentlichen kreisförmigen Querschnitt, einen sich von der Einlassöffnung (4) zur Auslassöffnung (5) erstreckenden Leitungskanal (3), eine zum Anschluss der Ringleitung (25) vorgesehene Einfädel- oder Ausfädelöffnung (15) und einen in den Leitungskanal (3) einmündenden Einfädel- oder Ausfädelkanal (14) umfasst, wobei der in den Leitungskanal (3) einmündende Einfädel- oder Ausfädelkanal (14) bogenförmig oder kreissegmentförmig zu einer von der Einlassöffnung (4) zur Auslassöffnung (5) gerichteten Hauptströmungsrichtung (H) in den Leitungskanal (3) einmündet,
**dadurch gekennzeichnet, dass**
die Mittelachse (20) des Leitungskanal (3) im Bereich der Einlassöffnung (4) und die Mittelachse (20') des Leitungskanal (3) im Bereich der Auslassöffnung (5) versetzt zueinander verlaufen, die Ringleitung (25) über den Einfädel- oder Ausfädelkanal (14) der ersten einstückigen Anschlussarmatur (1) aus dem Strang oder Ring (21) abgezweigt ist und die Ringleitung (25) über den Einfädel- oder Ausfädelkanal (14) der zweiten einstückigen Anschlussarmatur (1') zurück in den Strang oder Ring (21) geführt ist, wobei der zwischen den beiden Anschlussarmaturen (1, 1') angeordnete Rohrleitungsabschnitt (23') des Stranges oder Ringes (21) einen kleineren Querschnitt als die Rohrleitungsabschnitte (23, 23"), die jeweils mit der Einlassöffnung (4) der einzelnen Anschlussarmaturen (1, 1') verbunden sind, aufweist.

2. Trink- oder Brauchwassersystem nach Anspruch 1, **dadurch gekennzeichnet, dass** der Bogen, mit dem der Einfädel- oder Ausfädelkanal (14) in den Leitungskanal (3) einmündet, in einem Einmündungsbereich (9) des Einfädel- oder Ausfädelkanals (14) in den Leitungskanal (3) einen gleitenden Krümmungsradius aufweist.

3. Trink- oder Brauchwassersystem nach Anspruch 2, **dadurch gekennzeichnet, dass** der gleitende Krümmungsradius zwischen dem Doppelten und dem Zwanzigfachen des Radius der Auslassöffnung (5) liegt.

4. Trink- oder Brauchwassersystem nach einem der vorhergehenden Ansprüche, **dadurch gekennzeichnet, dass** im Einmündungsbereich (9) des Einfädel- oder Ausfädelkanals (14) in den Leitungskanal (3) ein Leitelement (19) angeordnet ist.

5. Trink- oder Brauchwassersystem nach einem der vorhergehenden Ansprüche, **dadurch gekennzeichnet, dass** die Auslassöffnung (5) und/oder die Einfädel- oder Ausfädelöffnung (14) einen geringeren Querschnitt als die Einlassöffnung (4) aufweist.

6. Trink- oder Brauchwassersystem nach einem der vorhergehenden Ansprüche, **dadurch gekennzeichnet, dass** die Anschlussarmatur (1,1 ') als einteiliges Gussteil ausgebildet ist.

7. Trink- oder Brauchwassersystem nach Anspruch 1, **dadurch gekennzeichnet, dass** in einem Steigrohrstrang (21) eine Ringleitung (25) derart über die jeweilgen Einfädel- oder Ausfädelöffnung (15) zweier Anschlussarmaturen (1, 1') an den Steigrohrstrang (21) angeschlossen ist, dass zwischen der Auslassöffnung (5) der ersten Anschlussarmatur (1) und der Auslassöffnung (5) der zweiten Anschlussarmatur (1') ein Rohrleitungsabschnitt (23') des Steigrohrstranges (21) angeordnet ist.

## Claims

1. Drinking-water or service-water system which has at least one storey or riser pipe string or ring (21) and comprises a plurality of ring lines (25) which are arranged one behind the other in the string or ring (21), as seen in the flow direction, which each lead to at least one consuming unit (22, 22', 22", 22"') and are each linked to the string or ring (21) via two single-piece connection fittings (1, 1'), wherein the single-piece connection fitting (1, 1'), for connecting a ring line (25) with at least one consuming unit (22, 22', 22", 22"') to a storey or riser pipe string or ring (21), comprises an inlet opening (4), which can be connected to the string or ring (21) and is of essentially circular cross section, an outlet opening (5), which can be connected to the string or ring (21) and is of essentially circular cross section, a duct (3), which extends from the inlet opening (4) to the outlet opening (5), an insertion or removal opening (15), which is provided for connection of the ring line (25), and an insertion or removal channel (14), which opens out into the duct (3), wherein the insertion or removal channel (14), which opens out into the duct (3), opens out into the duct (3) in the form of a bend, or in the form of a circle segment, in relation to a main flow direction (H), which is directed from the inlet opening (4) to the outlet opening (5), **characterized in that** the centre axis (20) of the duct (3) in the region of the inlet opening (4) and the centre axis (20') of the duct (3) in the region of the outlet opening (5) are offset in relation to one another, the ring line (25) is branched off from the string or ring (21) via the insertion or removal channel (14) of the first single-piece connection fitting (1), and the ring line (25) is guided back into the string or ring (21) via the insertion or removal channel (14) of the second single-piece connection fitting (1'), wherein the pipeline portion (23') of the string or ring (21), said portion being arranged between the two connection fittings (1, 1'), has a smaller cross section than the pipeline portions (23, 23"), which are each connected to the inlet opening (4) of the individual connection fittings (1, 1').

2. Drinking-water or service-water system according to Claim 1, **characterized in that** the bend, by way of which the insertion or removal channel (14) opens out into the duct (3), has a smooth radius of curvature in a region (9) in which the insertion or removal channel (14) opens out into the duct (3).

3. Drinking-water or service-water system according to Claim 2, **characterized in that** the smooth radius of curvature is between double the radius and twenty times the radius of the outlet opening (5).

4. Drinking-water or service-water system according to one of the preceding claims, **characterized in that** a directing element (19) is arranged in the region (9) in which the insertion or removal channel (14) opens out into the duct (3).

5. Drinking-water or service-water system according to one of the preceding claims, **characterized in that** the outlet opening (5) and/or the insertion or removal opening (14) have/has a smaller cross section than the inlet opening (4).

6. Drinking-water or service-water system according to one of the preceding claims, **characterized in that** the connection fitting (1, 1') is designed in the form of a single-part casting.

7. Drinking-water or service-water system according to Claim 1, **characterized in that**, in a riser pipe string (21), a ring line (25) is connected to the riser pipe string (21) the via the respective insertion or removal opening (15) of two connection fittings (1, 1') such that a pipeline portion (23') of the riser pipe string (21) is arranged between the outlet opening (5) of the first connection fitting (1) and the outlet opening (5) of the second connection fitting (1').

## Revendications

1. Système d'eau potable ou d'eau sanitaire comprenant au moins une rame ou une boucle d'étage ou de colonne montante (21), qui comprend plusieurs conduites annulaires (25) disposées les unes derrière les autres dans la direction d'écoulement dans la rame ou la boucle (21), qui conduisent à chaque fois au moins à un consommateur (22, 22', 22", 22"') et qui sont à chaque fois raccordées par le biais de deux armatures de raccordement d'une seule pièce (1, 1') à la rame ou à la boucle (21), l'armature de raccordement d'une seule pièce (1, 1'), pour le raccordement d'une conduite annulaire (25) à au moins un consommateur (22, 22', 22", 22"'), au niveau d'une rame ou d'une boucle d'étage ou de colonne montante (21), comprenant une ouverture d'entrée (4) pouvant être raccordée à la rame ou à la boucle (21) avec une section transversale essentiellement circulaire, une ouverture de sortie (5) pouvant être raccordée à la rame ou à la boucle (21) avec une section transversale essentiellement circulaire, un canal de guidage (3) s'étendant depuis l'ouverture d'entrée (4) jusqu'à l'ouverture de sortie (5), une ouverture d'introduction ou de rétraction (15) prévue pour le raccordement de la conduite annulaire (25) et un canal d'introduction ou de rétraction (14) débouchant dans le canal de guidage (3), le canal d'introduction ou de rétraction (14) débouchant dans le canal de guidage (3) débouchant sous forme de coude ou sous forme de segment circulaire par rapport à une direction d'écoulement principale (H) orientée depuis l'ouverture d'entrée (4) vers l'ouverture de sortie (5), dans le canal de guidage (3),**caractérisé en ce que** l'axe médian (20) du canal de guidage (3) dans la région de l'ouverture d'entrée (4) et l'axe médian (20') du canal de guidage (3) dans la région d'ouverture de sortie (5) s'étendent de manière décalée l'un par rapport à l'autre, la conduite annulaire (25) se ramifiant par le biais du canal d'introduction ou de rétraction (14) de la première armature de raccordement d'une seule pièce (1) à partir de la rame ou de la boucle (21) et la conduite annulaire (25) étant guidée par le biais du canal d'introduction ou de rétraction (14) de la deuxième armature de raccordement d'une seule pièce (1') de manière à revenir dans la rame ou la boucle (21), la portion de conduite tubulaire (23') de la rame ou de la boucle (21) disposée entre les deux armatures de raccordement (1, 1') présentant une plus petite section transversale que les portions de conduite tubulaire (23, 23") qui sont à chaque fois connectées à l'ouverture d'entrée (4) des armatures de raccordement individuelles (1, 1').

2. Système d'eau potable ou d'eau sanitaire selon la revendication 1, **caractérisé en ce que** le coude avec lequel le canal d'introduction ou de rétraction (14) débouche dans le canal de guidage (3), dans une région d'embouchure (9) du canal d'introduction ou de rétraction (14) dans le canal de guidage (3), présente un rayon de courbure graduel.

3. Système d'eau potable ou d'eau sanitaire selon la revendication 2, **caractérisé en ce que** le rayon de courbure graduel est compris entre deux fois et vingt fois le rayon de l'ouverture de sortie (5).

4. Système d'eau potable ou d'eau sanitaire selon l'une quelconque des revendications précédentes, **caractérisé en ce que** dans la région d'embouchure (9) du canal d'introduction ou de rétraction (14) dans le canal de guidage (3) est disposé un élément conducteur (19).

5. Système d'eau potable ou d'eau sanitaire selon l'une quelconque des revendications précédentes, **caractérisé en ce que** l'ouverture de sortie (5) et/ou l'ouverture d'introduction ou de rétraction (14) présente une plus petite section transversale que l'ouverture d'entrée (4).

6. Système d'eau potable ou d'eau sanitaire selon l'une quelconque des revendications précédentes, **caractérisé en ce que** l'armature de raccordement (1, 1') est réalisé sous forme de pièce en fonte d'une seule pièce.

7. Système d'eau potable ou d'eau sanitaire selon la revendication 1, **caractérisé en ce que** dans une rame de colonne montante (21), une conduite annulaire (25) est raccordée à la rame de colonne montante (21) la par le biais de l'ouverture d'introduction ou de rétraction respective (15) de deux armatures de raccordement (1, 1'), de telle sorte qu'entre l'ouverture de sortie (5) de la première armature de raccordement (1) et l'ouverture de sortie (5) de la deuxième armature de raccordement (1') soit disposée une section de conduite tubulaire (23') de la rame de colonne montante (21).
